# FASCICULE DE BREVET EUROPEEN

(11) **EP 2 147 487 B1**
(45) Date de publication et mention de la délivrance du brevet: **05.07.2017**
(21) Numéro de dépôt: 08805570.2
(22) Date de dépôt: 14.05.2008
(51) Int. Cl.: H01S 3/06, H01S 3/113

(54) **LASER A PUCE PULSE**
GEPULSTER MICROCHIP-LASER
PULSED MICROCHIP LASER

(30) Priorité: 14.05.2007 FR 0755065
(43) Date de publication de la demande: 27.01.2010
(73) Titulaire: Centre National de la Recherche Scientifique (C.N.R.S.), 75794 Paris Cedex 16 (FR); Universite de Limoges, 87032 Limoges Cedex 01 (FR); Horus Laser, 87280 Limoges (FR)
(72) Inventeur: LEFORT, Laurent, F-87000 Limoges (FR); PIOGER, Paul-Henri, F-87000 Limoges (FR); COUDERC, Vincent, F-87430 Verneuil-sur-Vienne (FR)
(74) Mandataire: Novagraaf Technologies
(86) Numéro de dépôt international: PCT/FR2008/000670
(87) Numéro de publication internationale: WO 2008/152251

(56) Documents cités:
- EP-A- 0 455 383
- EP-A1- 0 742 615
- WO-A-97/23932
- GB-A- 1 224 318
- US-A- 4 951 294
- US-A1- 2003 039 274
- US-A1- 2007 064 747
- NETTLETON J E ET AL: "MONOBLOCK LASER FOR A LOW-COST, EYESAFE, MICROLASER RANGE FINDER" APPLIED OPTICS, OSA, OPTICAL SOCIETY OF AMERICA, WASHINGTON, DC, US, vol. 39, no. 15, 20 mai 2000 (2000-05-20), pages 2428-2432, XP000950192 ISSN: 0003-6935 cité dans la demande

## Description

L'invention se rapporte au domaine des lasers à puce pulsé.

Il est connu qu'un laser à puce est une cavité fermée par deux miroirs, la cavité comprenant notamment un milieu laser amplificateur destiné à amplifier un faisceau de pompe.

Les lasers à puces sont des lasers particuliers dans lesquels la longueur de Fresnel associée à la largeur du faisceau dans la zone de gain du milieu laser amplificateur est supérieure à la longueur de la cavité.

Par exemple, pour une taille de faisceau de 50 micromètres dans la zone de gain du milieu laser amplificateur, la longueur de la cavité est inférieure à la longueur de Fresnel, c'est-à-dire environ 7,4 millimètres.

La longueur de la cavité formant un laser à puce est typiquement inférieure à 20 millimètres.

Par rapport aux autres lasers, les lasers à puces ont notamment l'avantage d'être des dispositifs à faible coût et permettent de générer des impulsions courtes, typiquement de l'ordre de la nanoseconde.

Du fait de ces contraintes sur la longueur de la cavité, à la différence des autres lasers, les lasers à puces ne comprennent pas d'éléments au sein de la cavité permettant une modification de la dimension transverse du faisceau dans la cavité. Ainsi, les lasers à puces sont par exemple dépourvus de lentilles, de miroirs courbes, de polariseur, ou de modulateur intracavités.

L'invention se rapporte plus particulièrement à un laser à puce déclenché, appelé en langue anglaise « Q-switched laser».

Il est connu qu'il existe deux façons de déclencher un laser, soit par voie active, via l'introduction d'un modulateur à commande externe, soit par voie passive à l'aide d'un milieu absorbant saturable placé dans la cavité.

Pour un laser à puce, du fait des contraintes de longueur évoquées précédemment, seule la voie passive est couramment utilisée.

L'invention se rapporte donc plus particulièrement à un laser à puce à déclenchement passif.

Il est connu qu'un milieu absorbant saturable est seulement transparent au delà d'un seuil d'intensité correspondant au blanchiment du milieu. Un tel milieu permet donc, dans un laser à puce, d'obtenir des impulsions lumineuses courtes.

Les lasers à puces à déclenchement passif peuvent être soit monolithiques, soit non-monolithiques.

Lorsqu'ils sont monolithiques, le milieu laser amplificateur et le milieu absorbant saturable ne forment qu'un unique composant, par exemple parce qu'ils sont unifiés par adhésion moléculaire et/ou fabriqués par croissance épitaxiale. Les miroirs d'entrée et de sortie sont directement déposés sur ce composant.

De tels lasers à puces monolithiques sont par exemple décrits dans les documents EP-A-0742615, ou US-A-2007/0064747.

Un problème de ces lasers à puces est que le faisceau oscillant dans la cavité traverse un unique milieu d'indice de réfraction sensiblement constant.

Dès lors, le faisceau se propage dans le laser à puce sans sélection naturelle de la polarisation de sortie.

Or, il est avantageux de sélectionner une polarisation particulière du faisceau se propageant dans le laser à puce pour atteindre de bonne stabilité et pour des applications de conversion de longueur d'onde dans des milieux non linéaires.

Le problème technique résolu par l'invention est donc de fournir un laser à puce à déclenchement passif qui puisse permettre un contrôle de la polarisation du faisceau laser issu du laser à puce.

Ce problème est résolu par un laser à puce à déclenchement passif formé par une cavité fermée par un miroir d'entrée et un miroir de sortie, caractérisé en ce que la cavité comprend des moyens de déviation agencés pour dévier un faisceau lumineux entre le miroir d'entrée et le miroir de sortie.

Selon l'invention, les moyens de déviation permettent une sélection d'une direction de polarisation unique.

En effet, un état de polarisation du faisceau est préférentiellement transmis lorsqu'il est dévié. Dès lors, contrairement aux lasers à puce actuels, il est possible de fixer une direction de polarisation unique dans le laser à puce.

En outre, l'introduction d'une sélection de l'état de polarisation grâce aux moyens de déviation permet également de filtrer passivement des longueurs d'ondes dans la cavité.

La publication « Monoblock laser for a low-cost, eyesafe, microlaser range finder » de Nottleton et al. enseigne un laser du type monobloc pour lequel le barreau amplificateur de Nd :YAG est séparé en deux parties par une zone de coupe à l'angle de Brewster de sorte à faciliter la polarisation linéaire dans la cavité.

Cette publication n'enseigne pas un laser à puce pulsé comme dans l'invention. Au contraire, selon ce document, les lasers à puce mentionnés sont monolithiques ou semi-monolithiques et n'ont pas une énergie de sortie suffisante (page 2429 colonne de gauche). En outre, dans ce document, les impulsions émises ont une durée d'impulsion supérieures à 25 nanosecondes.

Au contraire, selon l'invention, grâce à l'utilisation d'un laser à puce, la durée d'impulsion peut être inférieure à 5 nanosecondes, tout en permettant une sélection de la polarisation.

L'approche originale à la base de l'invention est donc d'avoir appliqué une structure non-monolitique par exemple du type Brewster comme dans la publication susmentionnée à un laser à puce, alors que tout incitait à fournir des lasers à puce monolithique, comme dans la demande US-A-2007/0064747.

Selon l'invention, le laser à puce pulsé du type non-monolithique avec des moyens de déviation tels que décrit ci-dessus permet alors d'obtenir des courtes durées d'impulsion, typiquement inférieures à 5 nanosecondes, tout en permettant une sélection de la polarisation.

Des modes de réalisation particuliers de l'invention sont décrits dans les revendications dépendantes.

Selon un mode de réalisation, la cavité comprend, entre le miroir d'entrée et le miroir de sortie, un milieu de séparation, les moyens de déviation comprenant au moins une surface de déviation au contact du milieu de séparation de sorte à dévier le faisceau lumineux lorsqu'il traverse la surface de déviation.

De préférence, le miroir d'entrée et le miroir de sortie ainsi que chaque surface de déviation sont des miroirs plans. Cette configuration a l'avantage de fournir une cavité laser instable. Au contraire, l'arrangement décrit dans la publication de Nottleton et al. précitée pour un laser monobloc fournit une cavité stable du fait de la présence d'un miroir de sortie concave.

La ou chaque surface de déviation peut être inclinée par rapport au miroir d'entrée.

En particulier, la ou chaque surface est inclinée par rapport la direction de propagation du faisceau laser selon l'angle de Brewster.

En outre, les milieux de part et d'autre de la ou chaque surface de déviation peuvent avoir des indices de réfraction différents.

De préférence, le laser à puce comprend un milieu laser amplificateur et un milieu absorbant saturable, le miroir d'entrée étant apte à transmettre un faisceau de pompe, le milieu laser amplificateur et le milieu absorbant saturable étant agencés pour générer un faisceau laser à partir du faisceau de pompe, le miroir de sortie étant agencé pour réfléchir partiellement le faisceau laser.

Selon un mode de réalisation, le milieu de séparation peut avoir un indice de réfraction différent de l'indice de réfraction du milieu laser amplificateur, et la surface de déviation peut avoir une surface du milieu laser amplificateur.

Selon un autre mode de réalisation, le milieu de séparation peut avoir un indice de réfraction différent de l'indice de réfraction du milieu absorbant saturable, et la surface de déviation peut comprendre une surface du milieu absorbant saturable.

En outre, le milieu de séparation peut avoir un indice de réfraction différent de l'indice de réfraction du milieu laser amplificateur et de l'indice de réfraction du milieu absorbant saturable, et les surfaces de déviation peuvent comprendre une surface du milieu absorbant saturable et une surface du milieu laser amplificateur.

Dans ce cas, les surfaces de déviation constituées par la surface du milieu absorbant saturable et la surface du milieu laser amplificateur peuvent être parallèles.

La surface de déviation peut être une surface d'une lame transparente au faisceau lumineux et, lorsque le milieu laser amplificateur est séparé du milieu absorbant saturable par le milieu de séparation, la lame transparente peut être positionnée dans le milieu de séparation.

Selon un mode de réalisation, la ou chaque surface de déviation est inclinée par rapport au miroir d'entrée, et en particulier, la ou chaque surface de déviation est inclinée par rapport à la direction de propagation du faisceau laser selon l'angle de Brewster.

La direction de propagation du faisceau laser est perpendiculaire aux miroirs d'entrée et de sortie.

Selon un mode de réalisation, la cavité peut comprendre un élément biréfringent agencé de sorte à former, avec les moyens de déviation, un filtre de Lyot. L'élément biréfringent peut être positionné dans le milieu de séparation. Ce mode de réalisation a l'avantage de permettre une modification de l'état de polarisation généré grâce aux moyens de déviation. Il permet donc d'adapter la polarisation du faisceau laser aux caractéristiques souhaitées pour le faisceau.

Selon un mode de réalisation, la cavité peut comprendre un milieu non linéaire apte à générer de nouvelles fréquences au sein de la cavité.

Dans ce cas, le milieu non linéaire peut être positionné entre le milieu laser amplificateur et le milieu absorbant saturable ou entre le milieu absorbant saturable et le miroir de sortie.

Selon un mode de réalisation avantageux, le milieu laser amplificateur et le milieu absorbant saturable sont montés mobiles l'un par rapport à l'autre. Ce mode de réalisation permet de modifier les caractéristiques du laser à puce en fonction des caractéristiques souhaitées pour le faisceau laser, notamment en ce qui concerne le nombre de modes optiques du faisceau, la puissance émise, ou la fréquence de répétition.

L'invention se rapporte également à un système comprenant un laser à puce tel que décrit précédemment, et des moyens de déplacement agencés pour déplacer le milieu laser amplificateur et le milieu absorbant saturable l'un par rapport à l'autre.

Un tel système a l'avantage de permettre une fabrication simple du laser à puce en fonction des caractéristiques souhaitées pour le faisceau laser, notamment en ce qui concerne le nombre de modes optiques du faisceau, la puissance émise, ou la fréquence de répétition.

L'invention se rapporte également à un système comprenant un laser à puce tel que décrit précédemment, une pompe optique agencée pour pomper longitudinalement le laser à puce, et des moyens de déplacement de pompe agencés pour déplacer la pompe par rapport au laser à puce de sorte à modifier les caractéristiques du faisceau laser émis en sortie du laser à puce.

Le pompage longitudinal permet de modifier les caractéristiques du faisceau de sortie par déplacement simple de la pompe dans un plan parallèle au miroir d'entrée.

L'invention se rapporte également à un procédé de génération d'un faisceau laser comprenant des étapes consistant à :
- fournir un laser à puce selon l'une des quelconques revendications ;
- injecter un faisceau lumineux dans le laser à puce ;
- dévier le faisceau lumineux dans le laser à puce.

L'invention sera mieux comprise à la lecture des dessins annexés dans lesquels :
- FIG. 1 représente un laser à puce selon un premier mode de réalisation de l'invention ;
- FIG. 2 représente un laser à puce selon un deuxième mode de réalisation de l'invention ;
- FIG. 3 représente un laser à puce selon un troisième mode de réalisation de l'invention ;
- FIG. 4 représente un laser à puce selon un quatrième mode de réalisation de l'invention ;
- FIG. 5 représente un laser à puce selon un cinquième mode de réalisation de l'invention ;
- FIG. 6 représente un laser à puce selon un sixième mode de réalisation de l'invention ;
- FIG. 7 représente un laser à puce selon un septième mode de réalisation de l'invention

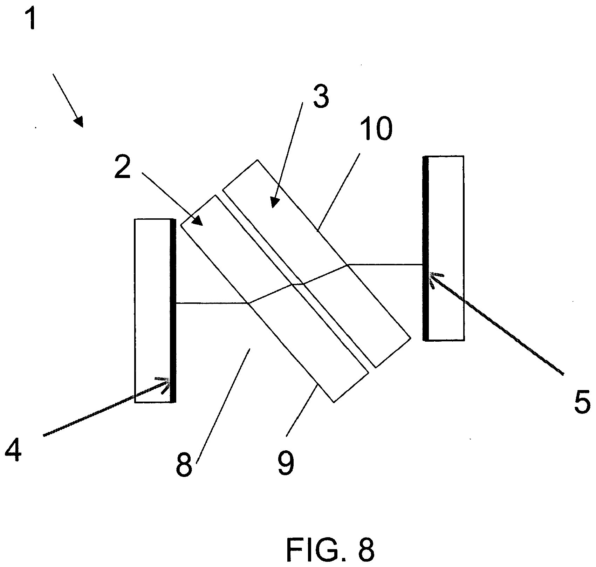

- FIG. 8 représente un laser à puce selon un huitième mode de réalisation de l'invention
- FIG. 9 et FIG. 10 représentent d'autres modes de réalisation de l'invention.

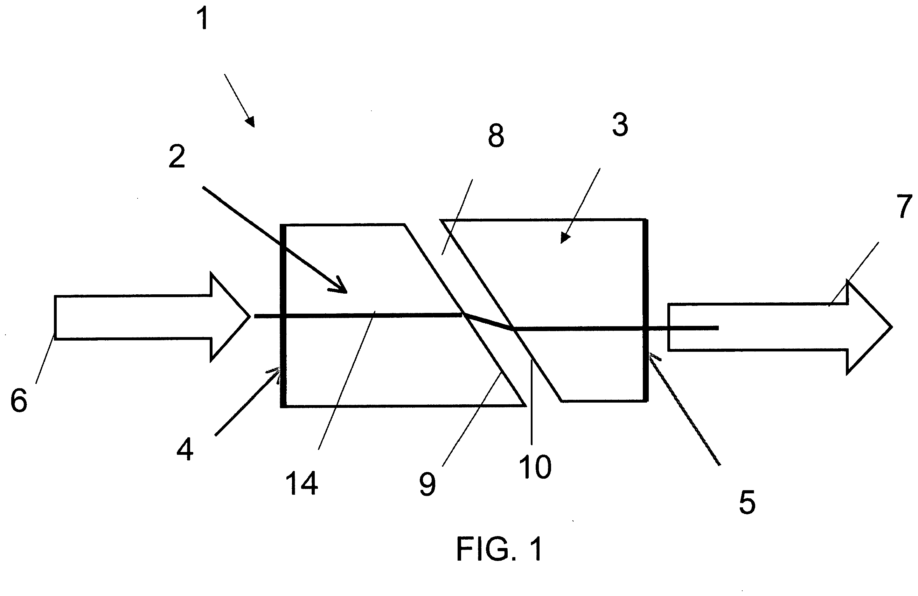

Sur les figures précédentes, des références numériques identiques se rapportent à des caractéristiques structurelles identiques ou similaires. L'invention est comme décrit dans la revendication 1. En référence à la FIG. 1, un laser à puce 1 selon l'invention est formé par une cavité fermée par un miroir d'entrée 4 et un miroir de sortie 5. Cette cavité est du type instable et le miroir d'entrée 4 et le miroir de sortie 5 sont des miroirs plans.

Le miroir d'entrée 4 est placé à la surface d'un milieu amplificateur laser 2. Le milieu amplificateur laser 2 peut être un matériau dopé à structure isotrope (Nd:YAG) ou anisotrope (Nd:YVO4).

Le milieu amplificateur laser 2 comprend une surface 9 traversée par le faisceau et inclinée par rapport au miroir d'entrée. Cette surface 9 est une surface plane.

Un milieu de séparation 8 sépare le milieu amplificateur laser 2 d'un milieu absorbant saturable 3. La surface inclinée 9 est au contact du milieu de séparation.

Le milieu de séparation 8 a un indice de réfraction différent de l'indice de réfraction du milieu amplificateur laser 2 et peut être de l'air.

Du fait de la présence de ce milieu de séparation, le laser à puce 1 selon l'invention est non-monolitique.

Le milieu absorbant saturable 3 peut être un cristal absorbant saturable du type YAG dopé chrome noté couramment Cr4+:YAG.

Le matériau absorbant saturable 3 a une surface inclinée 10 au contact du milieu de séparation 8. Cette surface inclinée 10 est une surface plane.

La surface inclinée 10 du matériau absorbant saturable 3 est sensiblement parallèle à la surface inclinée 9 du milieu amplificateur laser 2.

Le miroir de sortie 5 est placé sur la surface de sortie du milieu absorbant saturable 3.

Le miroir d'entrée 4 et le miroir de sortie 5 sont sensiblement parallèles et les surfaces 9 et 10 sont inclinées par rapport au miroir d'entrée 4 et au miroir de sortie 5. Dès lors, lorsqu'un faisceau de pompe 6 est injecté sensiblement perpendiculairement au miroir d'entrée 4, les surfaces 9 et 10 sont inclinées par rapport à la direction de propagation du faisceau.

L'inclinaison des surfaces 9 et 10 par rapport à la direction de propagation du faisceau laser est faite selon l'angle de Brewster pour l'interface entre le milieu de séparation 8 et les milieux amplificateur 2 et absorbant 3.

Puisque le cristal Nd:YAG formant le milieu amplificateur laser 2 et le cristal Cr4+:YAG formant le milieu absorbant saturable 3 ont des indices de réfraction sensiblement égaux, les angles de Brewster correspondant aux surfaces 9 et 10 sont sensiblement égaux, de sorte que ces surfaces 9 et 10 sont bien sensiblement parallèles.

En fonctionnement, un faisceau de pompe 6 est injecté dans le laser à puce 1 par le miroir d'entrée 4. Le faisceau de pompe peut être généré par une diode laser et a par exemple une longueur d'onde de 808 nanomètres.

Le faisceau de pompe se propage dans le milieu amplificateur 2 sous la forme d'un faisceau rectiligne 14.

Le milieu amplificateur laser 2 du type cristal Nd:YAG amplifie ce faisceau de pompe 6 et génère un faisceau amplifié à une longueur d'onde aux environs de 1064 nanomètres. La puissance du faisceau de pompe est telle qu'elle permet d'atteindre le seuil du régime laser.

A la surface 9 du milieu amplificateur laser 2, le faisceau amplifié ainsi généré est dévié selon les lois connues de l'optique par les lois de Descartes.

Puisque la surface 9 est inclinée par rapport à la direction de propagation du faisceau laser selon l'angle de Brewster, une transmission totale est réalisée au niveau de la surface 9 pour une polarisation donnée P du faisceau amplifié incident sur la surface 9. Les autres directions de polarisation sont partiellement réfléchies dans une direction différente de celle du faisceau à la polarisation P. Dès lors, la polarisation donnée P du faisceau amplifié est sélectionnée au niveau de la surface 9.

Au niveau de la surface 10 du milieu absorbant saturable 3, le faisceau amplifié est une nouvelle fois dévié. Puisque la surface 10 est également inclinée selon l'angle de Brewster, la polarisation P est également sélectionnée et est transmise préférentiellement dans le milieu absorbant saturable 3. En outre, le faisceau transmis dans le milieu absorbant saturable 3 est sensiblement parallèle au faisceau de pompe 6, de sorte que l'impulsion laser 7 générée à la sortie du miroir de sortie 5 a une direction sensiblement parallèle à celle du faisceau de pompe 6.

De façon connue en soi, afin d'obtenir ces caractéristiques de fonctionnement, le miroir d'entrée 4 est agencé de sorte à transmettre le faisceau de pompe 6, et à réfléchir un faisceau laser qui est généré après amplification par le milieu amplificateur laser 2. En outre, le miroir de sortie 5 est agencé de sorte à réfléchir partiellement le faisceau laser et à réfléchir totalement le faisceau de pompe restant qui se serait propagé jusqu'au miroir de sortie 5.

De telles caractéristiques des miroirs 4 et 5 peuvent être obtenues par des traitements réfléchissants ou semi-réfléchissants des faces externes du milieu amplificateur laser 2 et du milieu absorbant saturable 3.

La longueur totale de la cavité formant le laser à puce 1 est par exemple comprise entre 1 et 20 millimètres. Selon la largeur du faisceau dans le milieu amplificateur laser 2, la longueur de Fresnel associée à la largeur du faisceau dans la zone de gain du milieu laser amplificateur est supérieure à la longueur de la cavité, c'est-à-dire la distance entre le miroir d'entrée 4 et le miroir de sortie 5.

Grâce à la forme en biseau des surfaces 9 et 10, un déplacement transverse du faisceau de pompe 6, c'est-à-dire dans une direction parallèle au miroir d'entrée 4, permet de modifier la quantité de milieu amplificateur 2 et de milieu absorbant saturable 3 traversée par le faisceau jusqu'au miroir de sortie 5. Le fait de déplacer le milieu laser amplificateur 3 et le milieu absorbant saturable 2 l'un par rapport à l'autre de façon transverse et/ou longitudinale permet également de modifier les caractéristiques du faisceau laser émis.

Dès lors, il est possible, de façon très simple et sans avoir à reconstruire l'ensemble du laser à puce 1, de modifier les caractéristiques du faisceau laser 7 émis. La modification des caractéristiques du faisceau de sortie, et notamment de la fréquence de répétition, de la durée d'impulsion, de l'énergie et de la puissance de crête peut donc être réalisée comme dans la demande US-A-2007/0064747. Le laser à puce 1 selon l'invention peut donc être associé à une pompe optique apte à générer le faisceau de pompe, cette pompe optique comprenant des moyens de déplacement permettant son déplacement par rapport au laser à puce, notamment dans une direction parallèle au miroir d'entrée 4.

Toutefois, par rapport au contrôle des caractéristiques du document précité, le laser à puce 1 permet en outre un contrôle de la polarisation du faisceau laser.

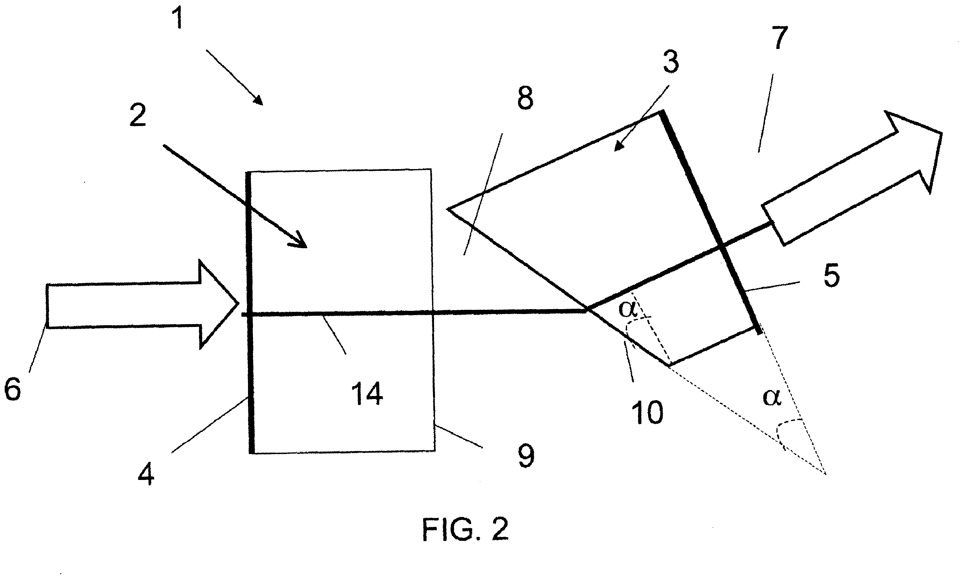

En référence à la FIG. 2, on décrit maintenant un deuxième mode de réalisation du laser à puce 1 selon l'invention.

Comme dans le mode de réalisation en référence à la FIG. 1, le laser à puce 1 comprend un milieu amplificateur laser 2 ayant une surface externe munie d'un miroir d'entrée 4 transparent à un faisceau de pompe 6. Il comprend également un milieu absorbant saturable 3 ayant une surface externe munie d'un miroir de sortie 5. Le milieu absorbant saturable 3 est séparé du milieu amplificateur laser 2 par un milieu de séparation 8. Le milieu de séparation 8 peut être de l'air. Le milieu amplificateur laser 2 peut être un cristal dopé du type Nd:YAG. Le milieu absorbant saturable 3 peut être un cristal absorbant saturable du type Cr4+:YAG.

Le milieu de séparation 8 a donc un indice de réfraction différent de l'indice de réfraction du milieu amplificateur 2 et du milieu absorbant saturable 3.

Les indices des milieux amplificateurs laser 2 et absorbant saturable 3 sont typiquement compris entre 1.7 et 2.2.

Dans ce deuxième mode de réalisation, le milieu amplificateur laser 2 a une surface interne 9 parallèle au miroir d'entrée 4.

Le milieu absorbant saturable 3 a une surface interne 10 inclinée par rapport à la direction de propagation du faisceau laser selon l'angle de Brewster lorsque le faisceau de pompe 6 est injecté sensiblement perpendiculairement au miroir d'entrée.

Le miroir de sortie 5 est également incliné par rapport au miroir d'entrée 4 de sorte que le faisceau dévié au niveau de la surface 10 du milieu absorbant saturable soit incident perpendiculairement sur le miroir 5. L'angle α d'inclinaison du miroir de sortie 5 par rapport à la surface inclinée 10 est aisément déterminable à partir de l'angle de Brewster correspondant à l'inclinaison de la surface 10 par rapport à la direction de propagation du faisceau laser lorsque le faisceau laser est injecté sensiblement perpendiculairement au miroir d'entrée 4.

En fonctionnement, le faisceau de pompe 6 est injecté dans la cavité sensiblement perpendiculairement au miroir 4 et amplifie le faisceau laser. Puisque la surface 9 du milieu amplificateur laser est parallèle au miroir 4, aucune déviation n'est réalisée au niveau de la surface 9.

Le faisceau ainsi amplifié se propage alors dans le milieu de séparation 8 et atteint la surface 10 inclinée selon l'angle de Brewster. Du fait de cette inclinaison, le faisceau amplifié est dévié et arrive perpendiculairement sur le miroir de sortie 5.

Comme expliqué en détail en référence au premier mode de réalisation, du fait de la déviation au niveau de la surface 10 du milieu absorbant saturable, il est possible de sélectionner une polarisation particulière du faisceau laser.

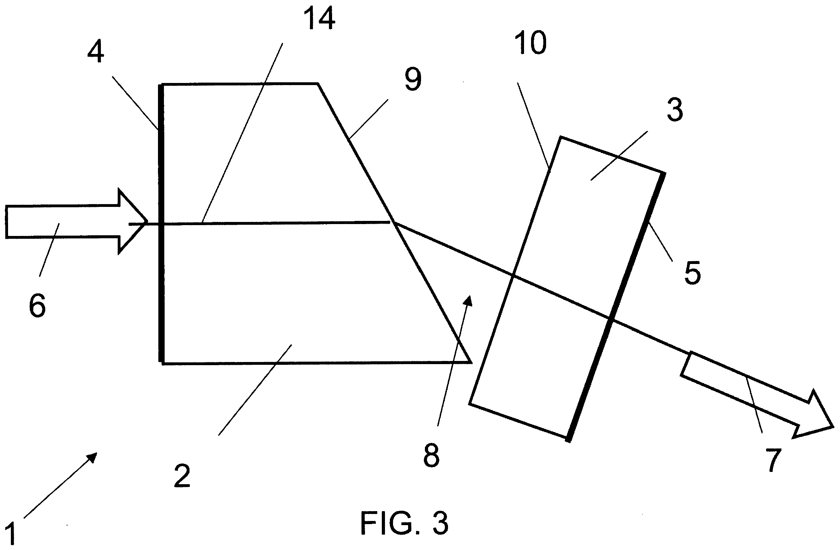

En référence à la FIG. 3, on décrit un troisième mode de réalisation dans lequel cette fois, la surface interne 10 du milieu absorbant saturable est parallèle au miroir de sortie 5 et la surface interne 9 du milieu absorbant saturable 2 est inclinée par rapport au miroir d'entrée selon l'angle de Brewster. Le faisceau est donc dévié au passage par la surface 9 du milieu amplificateur laser puis se propage selon une direction fixe jusqu'au miroir de sortie 5. Le miroir de sortie est dans ce cas agencé de sorte que le faisceau de sortie soit perpendiculaire au miroir de sortie.

Dans les trois premiers modes de réalisation décrits en détail ci-dessus, le fait d'utiliser les surfaces du milieu amplificateur laser 2 et/ou du milieu absorbant saturable 3 comme moyen de déviation a comme avantage supplémentaire le fait de permettre une sélection de polarisation tout en maintenant un dispositif compact puisqu'aucun composant de déviation en dehors du milieu amplificateur laser 2 et/ou du milieu absorbant saturable 3 n'est nécessaire pour la sélection de la polarisation.

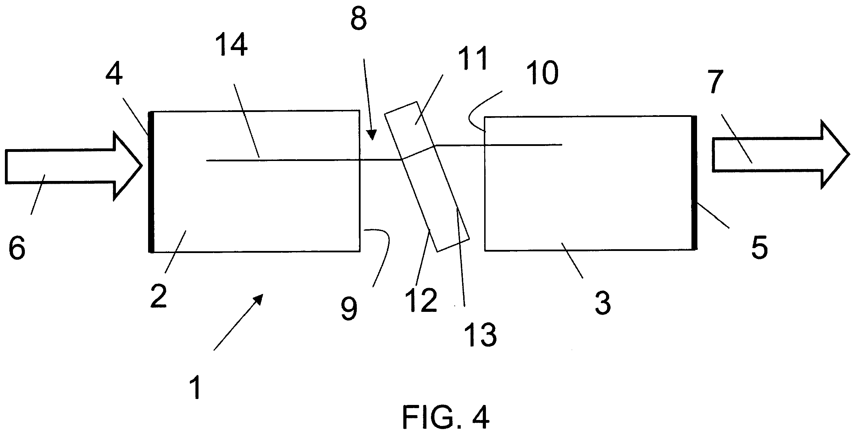

On décrit maintenant un quatrième mode de réalisation du laser à puce 1 selon l'invention en référence à la FIG. 4.

Selon ce mode de réalisation, le miroir d'entrée 4 et le miroir de sortie 5 sont parallèles, et la surface interne 9 du milieu amplificateur laser 2 et la surface interne 10 du milieu absorbant saturable sont également parallèles aux miroirs 4 et 5.

Un milieu de séparation 8 sépare le milieu amplificateur laser 2 et le milieu absorbant saturable 3. Ce milieu de séparation 8 peut être de l'air.

Dans ce milieu de séparation 8, est positionnée une lame 11 ayant des surfaces 12 et 13 faisant face respectivement au milieu amplificateur laser 2 et au milieu absorbant saturable 2.

Les surfaces 12 et 13 de la lame 11 sont inclinées selon l'angle de Brewster pour le matériau constituant la lame 11. La lame 11 est par exemple en un matériau du type silice ayant une épaisseur de l'ordre du millimètre. L'indice de réfraction de la lame 11 est différent de l'indice de réfraction du milieu de séparation 8, de sorte à permettre la déviation du faisceau lumineux lors de son passage à travers une surface de la lame 11.

En fonctionnement, un faisceau de pompe 6 est injecté sensiblement perpendiculairement au miroir d'entrée 4. Le faisceau laser est amplifié par le milieu amplificateur laser 2 et est transmis sans déviation de façon rectiligne dans le milieu de séparation 8. Au niveau de la surface d'entrée 12 de la lame 11, le faisceau est dévié selon les lois de Descartes. Il est également dévié au niveau de la surface de sortie 13 de la lame 11. Puisque les surfaces 12 et 13 sont parallèles, le faisceau ainsi obtenu en sortie de la lame 11 arrive perpendiculairement au miroir de sortie 5.

La déviation du faisceau au niveau de la lame 11 implique comme précédemment expliqué, une sélection de la polarisation. Dès lors, ce mode de réalisation permet également de contrôler la polarisation de l'impulsion laser 7 en sortie du laser à puce 1.

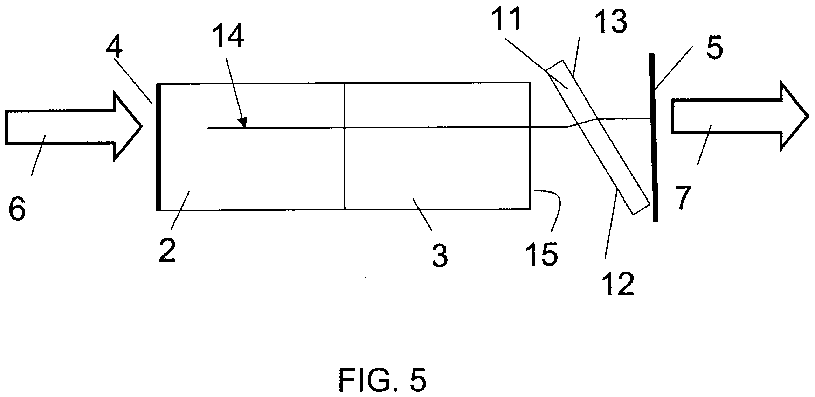

On décrit maintenant un cinquième mode de réalisation du laser à puce 1 en référence à la FIG. 5.

Dans ce cinquième mode de réalisation, le miroir de sortie 5 n'est plus réalisé par traitement de la surface externe du milieu absorbant saturable, mais constitue un élément optique séparé du milieu absorbant saturable par le milieu de séparation 8. Le miroir de sortie 5 est maintenu en place par des moyens de maintien (non représentés). Le milieu amplificateur laser 2 et le milieu absorbant saturable 3 forment un composant monolithique, par exemple par adhésion moléculaire.

Dans le milieu de séparation 8, c'est-à-dire entre le milieu absorbant saturable 3 et le miroir de sortie 5, on positionne une lame 11 inclinée selon l'angle de Brewster par rapport au miroir de sortie 5 et au miroir d'entrée 4 de sorte que, lorsque le faisceau est injecté perpendiculairement au miroir d'entrée 4, la lame 11 sont inclinée par rapport à la direction de propagation du faisceau laser. De la même façon, dans cet agencement, le faisceau sort du laser à puce perpendiculairement au miroir de sortie 5. Le miroir de sortie 5 est parallèle au miroir d'entrée 4. La surface externe 15 du milieu absorbant saturable 3 est parallèle au miroir d'entrée 4. La lame 11 de de ce cinquième mode de réalisation a par exemple les mêmes caractéristiques que la lame 11 décrite en référence à la FIG. 4. En particulier, l'indice de réfraction de la lame 11 est différent de l'indice de réfraction du milieu de séparation 8, de sorte à permettre la déviation du faisceau lumineux lors de son passage à travers une surface de la lame 11.

En fonctionnement, suite à l'injection d'un faisceau de pompe dans le laser à puce 1, un faisceau lumineux 14 se propage de façon rectiligne jusqu'à la lame 11 puisque la surface externe 15 est perpendiculaire au faisceau lumineux 14.

Au niveau de la lame 11, le faisceau lumineux est dévié comme décrit en référence à la FIG. 4. Le faisceau est d'abord dévié par la surface d'entrée 12 de la lame 11, le faisceau se propage dans la lame 11, puis est une nouvelle fois dévié par la surface de sortie 13 de la lame 11, de sorte à arriver perpendiculairement sur le miroir de sortie 5.

La déviation du faisceau au niveau de la lame 11 implique comme précédemment expliqué, une sélection de la polarisation. Dès lors, ce mode de réalisation permet également de contrôler la polarisation de l'impulsion laser 7 en sortie du laser à puce 1.

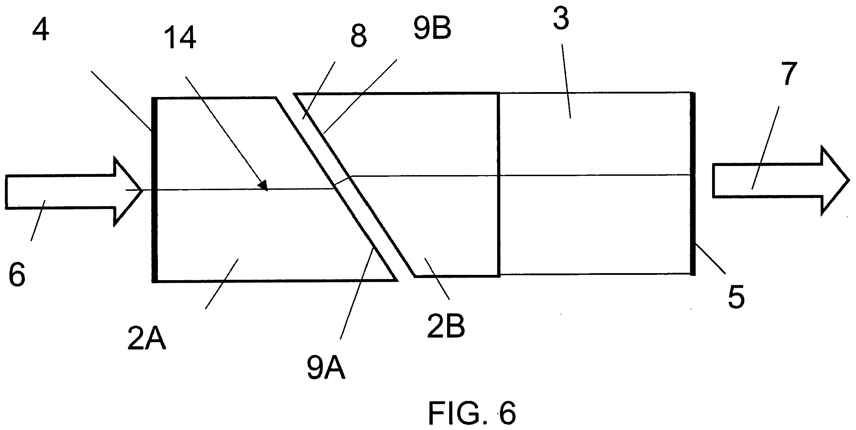

On décrit maintenant un sixième mode de réalisation du laser à puce 1 en référence à la FIG. 6.

Dans ce mode de réalisation, le milieu amplificateur laser est composé de deux parties séparées 2A et 2B. Les deux parties 2A et 2B sont deux cristaux dopés, par exemple un cristal Nd:YAG. Un milieu de séparation 8, par exemple de l'air, sépare les deux parties 2A et 2B.

L'indice de réfraction des milieux 2A et 2B est différent de l'indice de réfraction du milieu de séparation 8.

Les parties 2A et 2B comprennent respectivement des surfaces 9A et 9B agencées l'une par rapport à l'autre comme les surfaces 9 et 10 du premier mode de réalisation en référence à la FIG. 1. Elles sont donc parallèles et inclinées par rapport au miroir d'entrée 4. L'inclinaison par rapport au miroir d'entrée est telle que les surfaces 9A et 9B inclinés par rapport à la direction de propagation du faisceau laser suivant l'angle de Brewster, lorsque le faisceau de pompe 6 est injecté perpendiculairement au miroir d'entrée.

Le milieu absorbant saturable 3 et la partie 2A de milieu amplificateur laser forment un composant monolithique, par exemple par adhésion moléculaire. Le miroir de sortie 5 est formé par traitement réfléchissant sur la surface externe du milieu absorbant saturable 3.

En fonctionnement, un faisceau de pompe 6 est injecté dans le laser à puce sensiblement perpendiculairement au miroir d'entrée 4. Ce pompage est du type longitudinal. Le faisceau laser est amplifié en traversant d'abord la première partie du milieu amplificateur 2A. Dans cette première partie 2A, il se propage de façon rectiligne. Au niveau de la surface inclinée 9A du milieu amplificateur 2A, le faisceau est dévié, se propage de façon rectiligne dans le milieu de séparation 8, et arrive au niveau de la surface inclinée 9B du milieu amplificateur 2B. Lorsqu'il traverse cette surface inclinée 9B, le faisceau est également dévié de sorte qu'il se propage dans le milieu amplificateur 2B dans une direction sensiblement identique à la direction d'injection du faisceau de pompe, donc perpendiculairement au miroir 4. Dans le milieu amplificateur 2B, le faisceau est encore amplifié, et se propage de façon rectiligne. Il traverse ensuite le milieu absorbant saturable 3 et se propage de façon rectiligne jusqu'au miroir de sortie 5.

La déviation du faisceau au niveau des surfaces 9A et 9B implique comme précédemment expliqué, une sélection de la polarisation. Dès lors, ce mode de réalisation permet également de contrôler la polarisation de l'impulsion laser 7 en sortie du laser à puce 1.

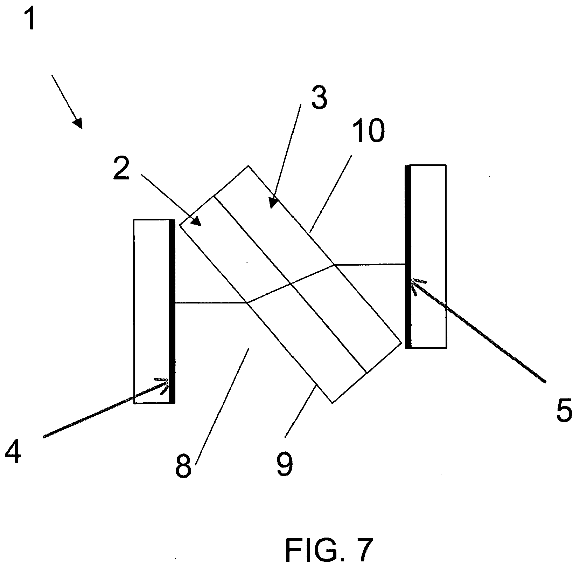

On décrit maintenant un septième mode de réalisation du laser à puce 1 en référence à la FIG. 7.

Dans ce mode de réalisation, la cavité est composée par 6 parties. Le miroir d'entrée 4 et le miroir de sortie 5 sont disposés de manière à être sensiblement parallèles. Le milieu amplificateur laser 2 est séparé du miroir d'entrée 4 par un milieu de séparation 8 et est incliné suivant l'angle de Brewster par rapport à la direction de propagation du faisceau laser. Le milieu absorbant saturable 3 et le milieu amplificateur laser 2 forment un composant monolithique, par exemple par adhésion moléculaire. La face 9 et la face 10 sont sensiblement parallèles. Le milieu absorbant saturable 3 est séparé du miroir de sortie 5 par le milieu de séparation 8.

En fonctionnement, un faisceau de pompe 6 est injecté dans le laser à puce sensiblement perpendiculairement au miroir d'entrée 4. Le faisceau laser est amplifié en traversant le milieu amplificateur 2. Il traverse ensuite le milieu absorbant saturable 3 de façon rectiligne. Lorsqu'il traverse la surface inclinée 10, le faisceau est également dévié de sorte qu'il soit perpendiculaire au miroir 5.

La déviation du faisceau au niveau des surfaces 9 et 10 implique comme précédemment expliqué, une sélection de la polarisation. Dès lors, ce mode de réalisation permet également de contrôler la polarisation de l'impulsion laser 7 en sortie du laser à puce 1.

On décrit maintenant un huitième mode de réalisation qui est une variante du septième précédemment décrit.

Dans ce mode de réalisation, le milieu amplificateur laser 2 est séparé du milieu absorbant saturable 3 par un milieu de séparation 8 avec des faces sensiblement parallèles.

On décrit maintenant des variantes des modes de réalisation précédemment décrits en détail.

Comme expliqué précédemment, une inclinaison des surfaces 9, 9A, 9B et 10 selon l'angle de Brewster maximise la sélection de polarisation, mais il est entendu que d'autres inclinaisons sont possibles pour les surfaces 9 et 10 tout en réalisant un certain niveau de sélection de la polarisation du faisceau. Dans tous les modes de réalisation précédents, l'angle d'inclinaison des surfaces au niveau desquels un faisceau lumineux est dévié peut donc être différent de l'angle de Brewster, tant que la surface n'est pas perpendiculaire à la direction de propagation du faisceau.

En outre, on a décrit un milieu amplificateur laser 2, 2A, 2B du type cristal dopé Nd:YAG. Il est entendu que d'autres milieux sont envisageables, tels que des cristaux dopés Yb, Er, Yb/Er, Th, ou Ho. Le choix du dopant est fonction de la longueur d'onde voulue et de la matrice du milieu amplificateur laser. Concernant cette matrice, il peut s'agir de cristaux isotropes ou avec orientation isotrope tels que des cristaux du type YAG, YVO4 c-cut, GdVO4 c-cut, YLF c-cut, verre ou céramique. Il peut également s'agir de cristaux anisotropes.

En outre, on a décrit un milieu saturant saturable 3 du type Cr4+:YAG. Il est entendu que d'autres milieu sont envisageables, tels que SESAM, V:YAG, LMA:Co. Le choix du dopant est fonction de la longueur d'onde émise.

En outre, on a décrit des surfaces inclinées 9, 9A, 9B et 10 en biseau. Cette forme pour les surfaces a l'avantage d'être simple à obtenir par découpe des cristaux. Toutefois, d'autres formes sont possibles pour ces surfaces, et notamment des surfaces non linéairement découpées dès lors que le faisceau laser peut être dévié au niveau de ces surfaces, c'est-à-dire qu'elles ne sont pas perpendiculaires à la direction de la propagation du faisceau lumineux.

En outre, dans le mode de réalisation décrit en référence à la FIG. 1, puisque le milieu amplificateur laser 2 et le milieu absorbant saturable 3 sont séparés par le milieu de séparation 8, il est possible de positionner des composants optiques dans le milieu de séparation 8.

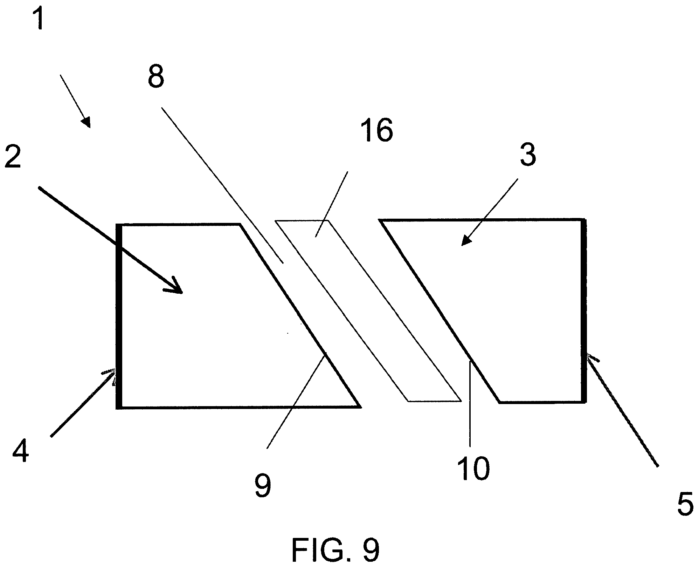

En particulier, la FIG. 9 illustre un mode de réalisation de l'invention dans lequel le laser à puce 1 de la FIG. 1 a été modifié en ajoutant, entre le milieu amplificateur laser 2 et le milieu absorbant saturable 3, un élément biréfringent 16 pour former un filtre de Lyot.

Il est connu qu'un filtre de Lyot est un filtre fréquentiel constitué d'un élément biréfringent, c'est-à-dire dont l'indice dépend de la polarisation du champ, et d'un polariseur. Par exemple, ce filtre permet de sélectionner une bande de longueur d'onde. L'accord du filtre est réalisé en tournant l'élément biréfringent par rapport au polariseur. Selon l'invention, les moyens de déviation décrits, par exemple les surfaces inclinées du milieu amplificateur laser 2 ou du milieu absorbant saturable 3, permettent une sélection de la polarisation, de sorte qu'elles peuvent réaliser une fonction de polarisation d'un filtre de Lyot. Ainsi, sur la figure 9, la surface 9 au contact du milieu de séparation 8 permettant une sélection de la polarisation, et l'élément biréfringent 16 forment un filtre de Lyot.

Ainsi, une onde incidente se propageant dans le milieu biréfringent du filtre de Lyot avec une direction de son vecteur polarisation non parallèle à un axe neutre de cet élément biréfringent va être décomposée en deux radiations se propageant sur chaque axe. La différence de chemin optique entre ces deux radiations se traduit par un changement de l'état de polarisation. Cette différence de chemin dépend de la longueur d'onde, de l'épaisseur du matériau et de la différence d'indice entre les axes.

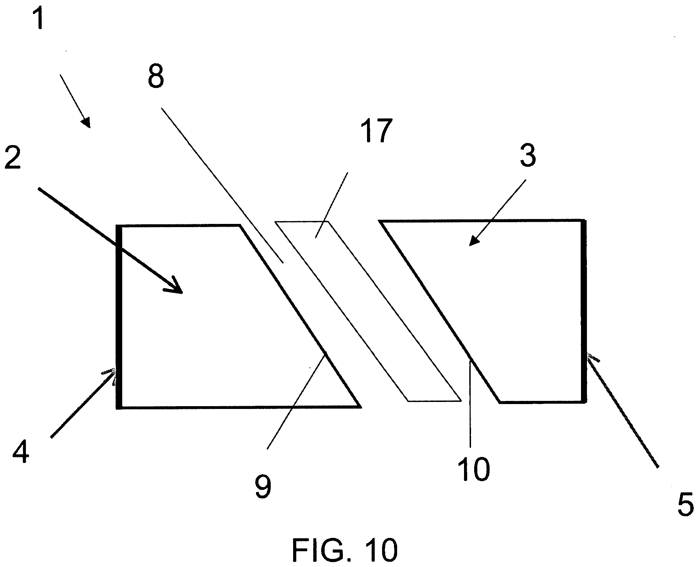

En outre, comme illustré FIG. 10, le milieu de séparation 8 peut également contenir un cristal non linéaire 17 permettant de générer de nouvelles fréquences au sein de la cavité laser à puce. Ce cristal non linéaire 17 peut être un doubleur de fréquence ou un cristal générant des fréquences par effet Raman.

Dans tous les modes de réalisation précédemment décrits, le laser à puce 1 peut être fabriqué de façon simple par déplacement du milieu amplificateur laser 2 par rapport au milieu absorbant saturable 3, ou par déplacement du milieu absorbant saturable 3 par rapport au milieu amplificateur laser 2.

Lorsque les miroirs d'entrée et de sortie 4 et 5 sont directement déposés respectivement sur le milieu amplificateur laser 2 et le milieu absorbant saturable 3, un déplacement du milieu amplificateur laser 2 par rapport au milieu absorbant saturable 3 provoque une variation de la longueur de la cavité ce qui permet notamment de modifier le nombre de modes longitudinaux se propageant dans la cavité.

Dans tous les modes de réalisation décrits précédemment, le miroir d'entrée 4 et le miroir de sortie 5 sont des miroirs plans, et toutes les surfaces de déviation, notamment les surfaces 9, 10, 11, 12, 13, 9A et 9B sont des surfaces planes. Ceci permet de fournir un laser à puce de type instable.

## Revendications

1. Laser à puce à déclenchement passif (1) formé par une cavité fermée par un miroir d'entrée (4) et un miroir de sortie (5), la cavité comprenant des moyens de déviation (9, 10, 11, 12, 13, 9A, 9B) agencés pour dévier un faisceau lumineux (14) entre le miroir d'entrée (4) et le miroir de sortie (5), la cavité comprenant, entre le miroir d'entrée (4) et le miroir de sortie (5), un milieu de séparation (8) étant de l'air, les moyens de déviation comprenant au moins une surface de déviation (9, 10, 11, 12, 13, 9A, 9B) au contact du milieu de séparation de sorte à dévier le faisceau lumineux lorsqu'il traverse la surface de déviation, le laser à puce à déclenchement passif (1) comprenant un milieu laser amplificateur (2) et un milieu absorbant saturable (3), **caractérisé en ce que** le miroir d'entrée (4) et le miroir de sortie (5) ainsi que la ou chaque surface de déviation (9, 10, 11, 12, 13, 9A, 9B) sont des miroirs plans, le miroir d'entrée (4) étant apte à transmettre un faisceau de pompe, le milieu laser amplificateur (2) et le milieu absorbant saturable (3) étant agencés pour générer un faisceau laser à partir du faisceau de pompe, le miroir de sortie (5) étant agencé pour réfléchir partiellement le faisceau laser, la longueur de la cavité étant entre 1 et 20 millimètres et la longueur de Fresnel associée à la largeur du faisceau lumineux (14) dans la zone de gain du milieu laser amplificateur (2) étant supérieure à la longueur de la cavité.

2. Laser à puce selon l'une des revendications précédentes, dans lequel la ou chaque surface de déviation est inclinée par rapport au miroir d'entrée.

3. Laser à puce selon la revendication précédente, dans lequel la ou chaque surface est inclinée par rapport la direction de propagation du faisceau laser selon l'angle de Brewster.

4. Laser à puce selon l'une des revendications 1 à 3, dans lequel les milieux de part et d'autre de la ou chaque surface de déviation ont des indices de réfraction différents.

5. Laser à puce selon la revendication précédente, dans lequel le milieu de séparation a un indice de réfraction différent de l'indice de réfraction du milieu laser amplificateur, et dans lequel la surface de déviation comprend une surface du milieu laser amplificateur.

6. Laser à puce selon la revendication 4, dans lequel le milieu de séparation a un indice de réfraction différent de l'indice de réfraction du milieu absorbant saturable, et dans lequel la surface de déviation comprend une surface du milieu absorbant saturable.

7. Laser à puce selon l'une des revendications 5 ou 6, dans lequel le milieu de séparation a un indice de réfraction différent de l'indice de réfraction du milieu laser amplificateur et de l'indice de réfraction du milieu absorbant saturable, et dans lequel les surfaces de déviation comprennent une surface du milieu absorbant saturable et une surface du milieu laser amplificateur.

8. Laser à puce selon la revendication précédente, dans lequel les surfaces de déviation constituées par la surface du milieu absorbant saturable et la surface du milieu laser amplificateur sont parallèles.

9. Laser à puce selon l'une des revendications 1 à 8, dans lequel la surface de déviation est une surface d'une lame transparente au faisceau lumineux.

10. Laser à puce selon la revendication précédente, dans lequel le milieu laser amplificateur est séparé du milieu absorbant saturable par le milieu de séparation, la lame transparente étant positionnée dans le milieu de séparation.

11. Laser à puce selon l'une des revendications 1 à 10, dans lequel la ou chaque surface de déviation est inclinée par rapport au miroir d'entrée.

12. Laser à puce selon la revendication précédente, dans lequel la ou chaque surface de déviation est inclinée par rapport à la direction de propagation du faisceau laser de l'angle de Brewster.

13. Laser à puce selon l'une des revendications précédentes, dans lequel le miroir d'entrée et le miroir de sortie sont parallèles.

14. Laser à puce selon l'une quelconque des revendications précédentes, dans lequel la cavité comprend un élément biréfringent (16) agencé de sorte à former, avec les moyens de déviation, un filtre de Lyot.

15. Laser à puce selon la revendication précédente, dans lequel l'élément biréfringent (16) est positionné dans le milieu de séparation (8).

16. Laser à puce selon l'une quelconque des revendications précédentes, dans lequel la cavité comprend un milieu non linéaire apte à générer de nouvelles fréquences au sein de la cavité.

17. Laser à puce selon la revendication précédente, dans lequel le milieu non linéaire est positionné entre le milieu laser amplificateur et le milieu absorbant saturable.

18. Laser à puce selon la revendication 16, dans lequel le milieu non linéaire est positionné entre le milieu absorbant saturable et le miroir de sortie.

19. Laser à puce selon l'une quelconque des revendications précédentes, dans lequel le milieu laser amplificateur et le milieu absorbant saturable sont montés mobiles l'un par rapport à l'autre.

20. Système comprenant un laser à puce selon l'une des revendications 1 à 19, et des moyens de déplacement agencés pour déplacer le milieu laser amplificateur et le milieu absorbant saturable l'un par rapport à l'autre.

21. Système comprenant un laser à puce selon l'une des revendications 1 à 19, une pompe optique agencée pour pomper longitudinalement le laser à puce, et des moyens de déplacement de pompe agencés pour déplacer la pompe par rapport au laser à puce de sorte à modifier les caractéristiques du faisceau laser émis en sortie du laser à puce.

22. Procédé de génération d'un faisceau laser comprenant des étapes consistant à :
- fournir un laser à puce selon l'une quelconque des revendications précédentes ;
- injecter un faisceau lumineux dans le laser à puce ;
- dévier le faisceau lumineux dans le laser à puce.

## Patentansprüche

1. Chiplaser mit passivem Auslösen (1), der durch einen Hohlraum gebildet ist, der durch einen Eingangsspiegel (4) und einen Ausgangsspiegel (5) verschlossen ist, wobei der Hohlraum Ablenkmittel (9, 10, 11, 12, 13, 9A, 9B) umfasst, die eingerichtet sind, um einen Lichtstrahl (14) zwischen dem Eingangsspiegel (4) und dem Ausgangsspiegel (5) abzulenken, wobei der Hohlraum zwischen dem Eingangsspiegel (4) und dem Ausgangsspiegel (5) ein Trennmedium (8), das Luft ist, umfasst, wobei die Ablenkmittel mindestens eine Ablenkoberfläche (9, 10, 11, 12, 13, 9A, 9B) umfassen, die mit dem Trennmedium derart in Berührung ist, dass der Lichtstrahl abgelenkt wird, wenn er die Ablenkoberfläche durchquert, wobei der Chiplaser mit passivem Auslösen (1) ein verstärkendes Lasermedium (2) und ein sättigbares Absorptionsmedium (3) umfasst, **dadurch gekennzeichnet, dass** der Eingangsspiegel (4) und der Ausgangspiegel (5) sowie die oder jede Ablenkoberfläche (9, 10, 11, 12, 13, 9A, 9B) flache Spiegel sind, wobei der Eingangsspiegel (4) geeignet ist, einen Pumpstrahl zu übertragen, das verstärkendes Lasermedium (2) und das sättigbare Absorptionsmittel (3) eingerichtet sind, um einen Laserstrahl ausgehend von dem Pumpstrahl zu erzeugen, wobei der Ausgangspiegel (5) eingerichtet ist, um teilweise den Laserstrahl zu reflektieren, wobei die Länge des Hohlraums zwischen 1 und 20 mm beträgt, und die mit der Breite des Lichtstrahls (14) in der Verstärkungszone des verstärkenden Lasermediums (2) verbundene Fresnel-Länge größer ist als die Länge des Hohlraums.

2. Chiplaser nach einem der vorhergehenden Ansprüche, wobei die oder jede Ablenkoberfläche in Bezug zu dem Eingangsspiegel geneigt ist.

3. Chiplaser nach dem vorhergehenden Anspruch, wobei die oder jede Oberfläche in Bezug zu der Ausbreitungsrichtung des Laserstrahls gemäß dem Brewster-Winkel geneigt ist.

4. Chiplaser nach einem der Ansprüche 1 bis 3, wobei die Medien auf jeder Seite der oder jeder Ablenkoberfläche unterschiedliche Brechungskoeffizienten haben.

5. Chiplaser nach dem vorhergehenden Anspruch, wobei das Trennmedium einen Brechungskoeffizienten hat, der von dem Brechungskoeffizienten des verstärkenden Lasermediums unterschiedlich ist, und wobei die Ablenkoberfläche eine Oberfläche des verstärkenden Lasermediums umfasst.

6. Chiplaser nach Anspruch 4, wobei das Trennmedium einen Brechungskoeffizienten hat, der von dem Brechungskoeffizienten des sättigbaren Absorptionsmediums unterschiedlich ist, und wobei die Ablenkoberfläche eine Oberfläche des sättigbaren Absorptionsmediums umfasst.

7. Chiplaser nach einem der Ansprüche 5 oder 6, wobei das Trennmedium einen Brechungskoeffizienten hat, der von dem Brechungskoeffizienten des verstärkenden Lasermediums und dem Brechungskoeffizienten des sättigbaren Absorptionsmediums unterschiedlich ist, und wobei die Ablenkoberflächen eine Oberfläche des sättigbaren Absorptionsmediums und eine Oberfläche des verstärkenden Lasermediums umfassen.

8. Chiplaser nach dem vorhergehenden Anspruch, wobei die Ablenkoberflächen, die aus der Oberfläche des sättigbaren Absorptionsmediums und der Oberfläche des verstärkenden Lasermediums bestehen, parallel sind.

9. Chiplaser nach einem der Ansprüche 1 bis 8, wobei die Ablenkoberfläche eine Oberfläche einer für den Lichtstrahl durchlässigen Klinge ist.

10. Chiplaser nach dem vorhergehenden Anspruch, wobei das verstärkende Lasermedium von dem sättigbaren Absorptionsmedium durch das Trennmedium getrennt ist, wobei die durchlässige Klinge in dem Trennmedium positioniert ist.

11. Chiplaser nach einem der Ansprüche 1 bis 10, wobei die oder jede Ablenkoberfläche in Bezug zu dem Eingangsspiegel geneigt ist.

12. Chiplaser nach dem vorhergehenden Anspruch, wobei die oder jede Ablenkoberfläche in Bezug zu der Ausbreitungsrichtung des Laserstrahls um den Brewster-Winkel geneigt ist.

13. Chiplaser nach einem der vorhergehenden Ansprüche, wobei der Eingangsspiegel und der Ausgangspiegel parallel sind.

14. Chiplaser nach einem der vorhergehenden Ansprüche, wobei der Hohlraum ein doppelt brechendes Element (16) umfasst, das derart eingerichtet ist, dass es mit den Ablenkmitteln ein Lyot-Filter bildet.

15. Chiplaser nach dem vorhergehenden Anspruch, wobei das doppelt brechende Element (16) in dem Trennmedium (8) positioniert ist.

16. Chiplaser nach einem der vorhergehenden Ansprüche, wobei der Hohlraum ein nichtlineares Milieu umfasst, das geeignet ist, um neue Frequenzen innerhalb des Hohlraums zu erzeugen.

17. Chiplaser nach dem vorhergehenden Anspruch, wobei das nichtlineare Milieu zwischen dem verstärkendes Lasermedium und dem sättigbaren Absorptionsmedium positioniert ist.

18. Chiplaser nach Anspruch 16, wobei das nichtlineare Milieu zwischen dem sättigbaren Absorptionsmedium und dem Ausgangsspiegel positioniert ist.

19. Chiplaser nach einem der vorhergehenden Ansprüche, wobei das verstärkendes Lasermedium und das sättigbare Absorptionsmedium beweglich zueinander montiert sind.

20. System, das einen Chiplaser nach einem der Ansprüche 1 bis 19 umfasst, sowie Verlagerungsmittel, die eingerichtet sind, um das verstärkendes Lasermedium und das sättigbare Absorptionsmedium zueinander zu verlagern.

21. System, das einen Chiplaser nach einem der Ansprüche 1 bis 19, eine optische Pumpe, die eingerichtet ist, um den Chiplaser längs zu pumpen, und Pumpenverlagerungsmittel, die eingerichtet sind, um die Pumpe in Bezug zu dem Chiplaser derart zu verlagern, dass die Merkmale des Laserstrahls, der am Ausgang des Chiplasers abgegeben wird, geändert werden, umfasst.

22. Verfahren zum Erzeugen eines Laserstrahls, das die folgenden Schritte umfasst:
- Bereitstellen eines Chiplasers nach einem der vorhergehenden Ansprüche,
- Injizieren eines Laserstrahls in den Chiplaser,
- Ablenken des Laserstrahls in den Chiplaser.

## Claims

1. Passively triggered microchip laser (1) formed by a cavity closed by an input mirror (4) and an output mirror (5), said cavity including deflection means (9, 10, 11, 12, 13, 9A, 9B) arranged to deflect a light beam (14) between the input mirror (4) and the output mirror (5), wherein the cavity includes, between the input mirror (4) and the output mirror (5), a separation medium (8) being air, the deflection means including at least one deflection surface (9, 10, 11, 12, 13, 9A, 9B) in contact with the separation medium so as to deflect the light beam when it goes through the deflection surface, said passively triggered microchip laser (1) including an amplifying laser medium (2) and a saturable absorbing medium (3), **characterized in that** the input mirror (4) and the output mirror (5) as well as the or each deflection surface (9, 10, 11, 12, 13, 9A, 9B) are plane mirrors, the input mirror (4) being capable of transmitting a pump beam, the amplifying laser medium (2) and the saturable absorbing medium (3) being arranged to generate a laser beam from the pump beam, the output mirror (5) being arranged to partially reflect the laser beam, the length of the cavity being between 1 and 20 millimeters and the Fresnel's length associated to the width of the light beam (14) in the gain zone of the amplifying laser medium (2) being longer than the length of the cavity.

2. Microchip laser according to one of the preceding claims, wherein the or each deflection surface is inclined with respect to the input mirror.

3. Microchip laser according to the preceding claim, wherein the or each surface is inclined with respect to the direction of the laser beam propagation according to Brewster's angle.

4. Microchip laser according to one of claim 1 to 3, wherein the media on either side of the or each deflection surface have different refractive indices.

5. Microchip laser according to the preceding claim, wherein the separation medium has a refractive index different from the refractive index of the amplifying laser medium, and wherein the deflection surface includes a surface of the amplifying laser medium.

6. Microchip laser according to claim 4, wherein the separation medium has a refractive index different from the refractive index of the saturable absorbing medium and wherein the deflection surface includes a surface of the saturable absorbing medium.

7. Microchip laser according to one of claim 5 or 6, wherein the separation medium has a refractive index different from the refractive index of the amplifying laser medium and the refractive index of the saturable absorbing medium, and wherein the deflection surfaces include a surface of the saturable absorbing medium and a surface of the amplifying laser medium.

8. Microchip laser according to the preceding claim, wherein the deflection surfaces constituted by the surface of the saturable absorbing medium and the surface of the amplifying laser medium are parallel.

9. Microchip laser according to one of claim 1 to 8, wherein the deflection surface is a surface of a transparent plate to light beam.

10. Microchip laser according to the preceding claim, wherein the amplifying laser medium is separated from the saturable absorbing medium by the separation medium, the transparent plate being positioned in the separation medium.

11. Microchip laser according to one of claim 1 to 10, wherein the or each deflection surface is inclined with respect to the input mirror.

12. Microchip laser according to the preceding claim, wherein the or each deflection surface is inclined with respect to the propagation direction of the laser beam in Brewster's angle.

13. Microchip laser according to one of the preceding claims, wherein the input mirror and the output mirror are parallel.

14. Microchip laser according to any one of the preceding claims, wherein the cavity includes a birefringent element (16) arranged so as to form, together with the deflection means, a Lyot type filter.

15. Microchip laser according to the preceding claim, wherein the birefringent element (16) is positioned in the separation medium (8).

16. Microchip laser according to any one of the preceding claims, in which the cavity includes a non linear medium capable of generating new frequencies within the cavity.

17. Microchip laser according to the preceding claim, wherein the non linear medium is positioned between the amplifying laser medium and the saturable absorbing medium.

18. Microchip laser according to claim 16, wherein the non linear medium is positioned between the saturable absorbing medium and the output mirror.

19. Microchip laser according to any one of the preceding claims, wherein the amplifying laser medium and the saturable absorbing medium are mounted to be movable with respect to each other.

20. System including a microchip laser according to one of claim 1 to 19, and displacement means arranged for displacing the amplifying laser medium and the saturable absorbing medium with respect to each other.

21. System including a microchip laser according to one of claim 1 to 19, an optical pump being arranged to longitudinally pump the microchip laser, and means for displacing the pump arranged to displace the pump with respect to the microchip laser so as to modify the characteristics of the laser beam emitted at the output of the microchip laser.

22. Method for generating a laser beam including steps comprising:
- providing a microchip laser according to any one of the preceding claims;
- injecting a light beam into the microchip laser;
- deviating the light beam into the microchip laser.
